(19) Europäisches Patentamt
European Patent Office
Office européen des brevets

(11) Publication number: 0 298 753
A2

(12) # EUROPEAN PATENT APPLICATION

(21) Application number: 88306241.6

(22) Date of filing: 08.07.88

(51) Int. Cl.$^4$: C 08 L 79/04

(30) Priority: 10.07.87 JP 172563/87

(43) Date of publication of application:
11.01.89 Bulletin 89/02

(84) Designated Contracting States: DE FR GB

(71) Applicant: HONDA GIKEN KOGYO KABUSHIKI KAISHA
1-1, Minamiaoyama 2-chome
Minato-ku Tokyo 107 (JP)

(72) Inventor: kumata, Masataka
2-28-33, Mishuku Setagaya-Ku
Tokyo (JP)

Nishino, Hideo
902-21, fujikubo Miyoshi-machi
Iruma-gun Saitama (JP)

Takada, Atsuko
5-3-15, Honcho
Shiki-shi Saitama (JP)

(74) Representative: Cockbain, Julian Roderick Michaelson et al
Frank B. Dehn & Co. European Patent Attorneys Imperial House 15-19, Kingsway
London WC2B 6UZ (GB)

(54) **Method for the production of a molecular composite.**

(57) A method is described for the production of a molecular composite suitable for use as a structural material for aircraft, automobiles and spacecraft, the method comprising dissolving a rigid aromatic polymer and a matrix polymer in an acidic solvent comprising an aqueous phosphoric acid solution and subsequently removing said solvent to yield a molecular composite with excellent structural properties with improved resistance to physical degradation and reduced corrosive effect on metals which come into contact therewith.

EP 0 298 753 A2

## Description

### Method for the Production of a Molecular Composite

This invention relates to a method of producing a molecular composite.

Heretofore, resin composites reinforced with glass fibres and carbon fibres have been known in the art and have found extensive utility in various applications. The strength of such composites is greatly increased by the presence of reinforcing fibres and by the interfacial strength between the fibres and the resin matrix. This interfacial strength is directly proportional to the contact surface area between the fibres and the resin matrix. Addition to the contact surface area necessitates an increase in the aspect ratio of the fibres. The aspect ratio is the ratio of length to diameter of the fibres. The diameter of these fibres, however, can only be reduced so far. Thus, the amount that the interfacial strength can be increased by increasing the aspect ratio is also limited. The practice of reinforcing resin composites by incorporating fibres therein in an interwoven form has been popular even though it complicates the process of production.

In recent years, aromatic polyamides, generically called Alamides, have been developed as rigid polymers and have found utility as reinforcing fibres. Since these aromatic polyamides exhibit poor adhesiveness to other resins, the aromatic polyamide fibres must be provided with improved adhesive properties to be used effectively in resin composites.

Japanese Patent Application Disclousre SHO 57(1982)-195,136 discloses an ionomeric resin composition reinforced with aromatic polyamide fibres, the composition comprising 40 to 99.9 parts by weight of an olefinic ionomeric polymer and 60 to 0.1 parts by weight of para-oriented wholly aromatic polyamide fibres. The aromatic polyamide fibres are formed of repeating units represented by the general formulae, $-HN-Ar_1NH-CO-Ar_2-CO-$ and/or $-NH-Ar_3-CO-$ wherein $Ar_1$, $Ar_2$, and $Ar_3$ stand for different para-oriented aromatic groups, and the surface thereof is modified by N-substitution. Examples of the N-substiuent groups include alkyls, aralkyls, hydroxyalkyls, and carboxylates. The introduction of the N-substituent enables the wholly aromatic polyamide fibres to acquire improved dispersibility in the ionomeric resin and improved adhesiveness thereto. The introduction of the substituent nevertheless impairs the strength of the wholly aromatic polyamide fibres. Moreover, since the reinforcing material is fibrous, its aspect ratio cannot be substantially increased and it can only reinforce the composites to a limited extent.

In view of the above-mentioned limitations of using fibres to increase the strength of resins, a polymer blend type composite (molecular composite) having the so-called mutual immersion type structure has been produced. The structure is obtained by causing a so-called rigid polymer such as an aromatic polyamide to be dispersed so finely in a flexible matrix polymer as to reach the molecular level. Since the molecular composite of the nature just mentioned is unaffected by the principle that strength is produced by unidirectional orientation of molecular chains of the rigid polymer, it exhibits little anisotropy and has excellent physical properties such as mechanical strength, thermal stability, and resistance to solvents.

U.S. Patent No. 4,207,407 disclosed a polymeric alloy which is comprised of a coil-shaped heterocyclic polymer and a rigid aromatic heterocyclic polymer represented by the following formulae:

Coil-shaped heterocyclic polymer

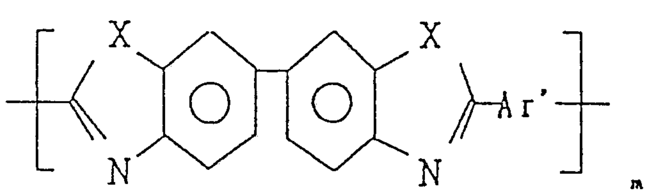

or

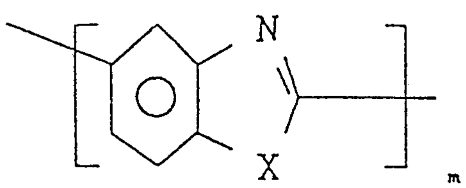

Rigid aromatic heterocyclic polymer

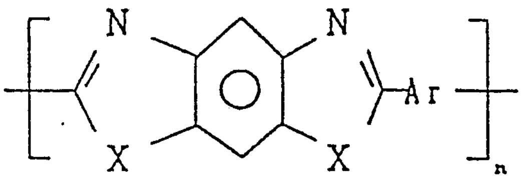

or

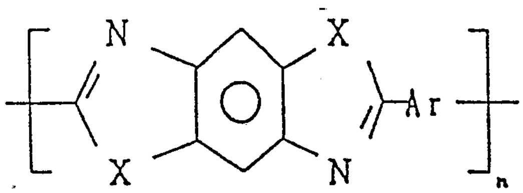

These polymers are dissolved in methanesulfonic acid solvent and the polymeric solution obtained is cast on a surface, trèated to remove the solvent, and then dried to give rise to the polymeric alloy. When this polymeric alloy is used for structural materials in aircraft and automobiles, for example, the physical properties of the polymer alloy are degraded and the metallic members of the aircraft or automobiles placed in contact with the polymer alloy are corroded due to the extremely corrosive nature of the solvent used to produce the alloy.

There is thus a need for an improved method for the production of molecular composites of an aromatic polymer and a matrix polymer, particularly molecular composites suitable for use as structural materials for aircraft, automobiles and spacecraft.

We have found that aqueous phosphoric acid solution is a good solvent for both the rigid aromatic polymer and the matrix polymer in the production of molecular composites. Moreover the phosphoric acid solution exhibits notably low corrosiveness compared with the sulfuric acid or methanesulfonic acid used in the prior art and permits easy removal of the composite from casting surfaces and also functions as a condensing agent.

Accordingly, in one aspect the present invention provides a method of producing a molecular composite, said method comprising dissolving a rigid aromatic polymer or a precursor therefor and a matrix polymer or a precursor therefor in an acidic solvent to yield a homogeneous solution, if required reacting a said precursor to produce a said rigid aromatic polymer or matrix polymer, and divesting the homogeneous solution containing said rigid aromatic polymer and said matrix polymer of said acidic solvent whereby to yield said composite, wherein said rigid aromatic polymer and said matrix polymer each contain structural repeat units comprising a benzene ring carrying at least one condensed heterocyclic ring formed by a bridging group of formula $-X-\overset{|}{C}=N-$ where X which is attached to the benzene ring represents NH, N-phenyl, 0 or S, characterised in that as said acidic solvent is used an aqueous phosphoric acid solution.

Generally, the rigid polymer component of the composite produced according to the method of the invention may be distinguished from the matrix polymer component by its relatively higher rigidity.

In a preferred embodiment the method of the invention comprises dissolving a rigid aromatic polymer possessing a structural unit of formula

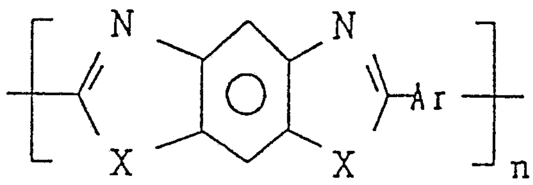

or

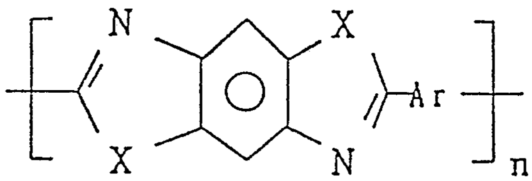

or

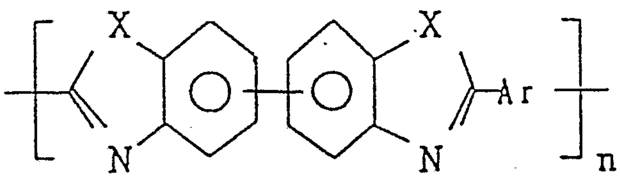

for example 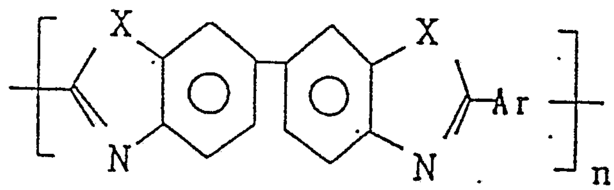

(wherein X is as defined above and Ar represents an aromatic group) or a precursor therefor and a matrix polymer possessing a structural unit of formula

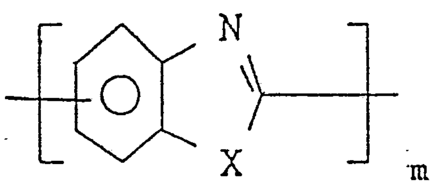

for example 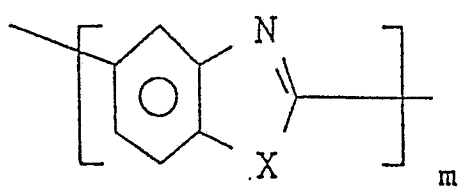

(wherein X is as defined above) or a precursor therefor in an aqueous phosphoric acid solution.

In the formulae above, n and m are integers indicating that the bracketted groups are repeated.

Where a precursor, e.g. a condensable starting material or prepolymer, is used in the method of the invention then generation of the relevant polymer may conveniently be achieved by heating the homogeneous solution to a temperature not exceeding 250°C, thereby inducing a condensation reaction of the starting substance or prepolymer.

The rigid aromatic polymer to be used in the method of this invention conveniently comprises a structural repeat unit having two nitrogen-containing condensation rings attached to opposite sides of a benzene ring or comprises two linked benzene rings each carrying one such condensation ring and exhibits relatively high rigidity. Examples of the rigid aromatic polymer are polybenzimidazole, polybenzothiazole, polybenzooxazole, polybisbenzimidazole, polybisbenzothiazole and polybisbenzooxazole. The rigid aromatic polymer, e.g. a polybenzooxazole, may be produced by the following reaction:

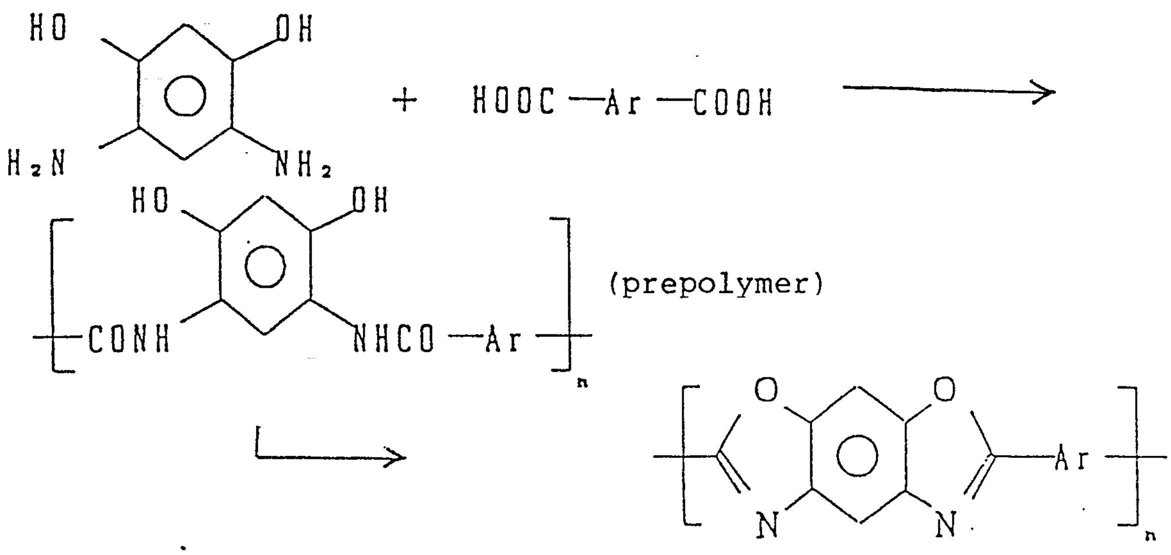


The matrix polymer conveniently comprises a structural repeat unit having a nitrogen-containing condensation ring, e.g. a -N = C -X- bridge, attached to one side of a benzene ring and exhibits relatively low rigidity. Examples of the matrix polymer include 2,5-polybenz-imidazole and 2,5-polybenzoxazole. Copolyamides comprising the structural repeat unit mentioned above and a polyamide unit such as nylon 6, nylon 66, nylon 610, or nylon 612 are also available as the matrix polymer.

The distinction between the rigid aromatic polymer and the matrix polymer may be drawn by the magnitude of rigidity. Thus a given polymer may, depending on the polymer with which it is combined to form a composite, function either as a rigid aromatic polymer or as a matrix polymer.

The eventual mixing ratio by weight of the rigid aromatic polymer and the matrix polymer will generally fall in the range of between 5 to 95 and 80 to 20. If the mixing ratio is less than 5 to 95, the rigid aromatic polymer may fail to provide adequate rigidity in the produced molecular composite and, conversely, if the mixing ratio exceeds 80 to 20, the produced molecular composite may exhibit insufficient mechanical strength.

The aqueous phosphoric acid solution used in the method of the invention is conveniently an aqueous solution containing a high concentration of phosphoric acid or polyphosphoric acid, preferably a concentration in the range of 80 to 95% by weight, more preferably 85 to 90% by weight.

The rigid aromatic polymer and the matrix polymer both dissolve in the aqueous phosphoric acid solution to form a homogeneous solution. The preparation of this solution is not limited to a particular method and any method known to one skilled in the art is acceptable. The two polymers may be mixed in the aqueous phosphoric acid solution simultaneously. The two polymers may also be dissolved separately and then subsequently mixed together. The concentration of the rigid aromatic polymer in the aqueous phosphoric acid solution is conveniently in the range of 2 to 80% by weight, preferably 2 to 20% by weight and that of the matrix polymer in the same aqueous solution is conveniently in the range of 2 to 80% by weight, preferably 2 to 20% by weight.

The preparation of the homogeneous solution can be carried out at normal room temperature. To enhance solubility the preparation of the solution should however be carried out at a temperature in the range of 25° to 100° C.

The aqueous phosphoric acid solution in which the rigid aromatic polymer and the matrix polymer have been dissolved may subsequently be cast on a surface and dried under a high degree of vacuum, to produce a film. Since the produced film contains residual phosphoric acid, it is preferably washed with an alkaline aqueous solution to remove the residual phosphoric acid. Aqueous sodium bicarbonate solution or an aqueous amide solution, for example, are suitable for this purpose. The film is then preferably washed with water and, when necessary, washed with an aqueous solution of a solvent such as N,N-dimethyl acetamide of N,N-dimethylformamide which is capable of reacting with mineral acid and forming a complex salt (concentration in the range of 5 to 80% by weight). Finally, the film will conveniently be dried thoroughly under vacuum.

When a starting substance for the matrix polymer (or rigid aromatic polymer) is used in place of the matrix polymer (or rigid aromatic polymer) itself, a homogeneous aqueous phosphoric acid solution of the rigid aromatic polymer (or matrix polymer) and the starting substance will preferably be prepared in advance and this homogeneous solution is then heated. The polymerisation of the starting substance to the matrix polymer (or rigid aromatic polymer) generally proceeds through the formation of a prepolymer. Polybisbenzimidazole, for example, may be synthesized through the following reaction path:

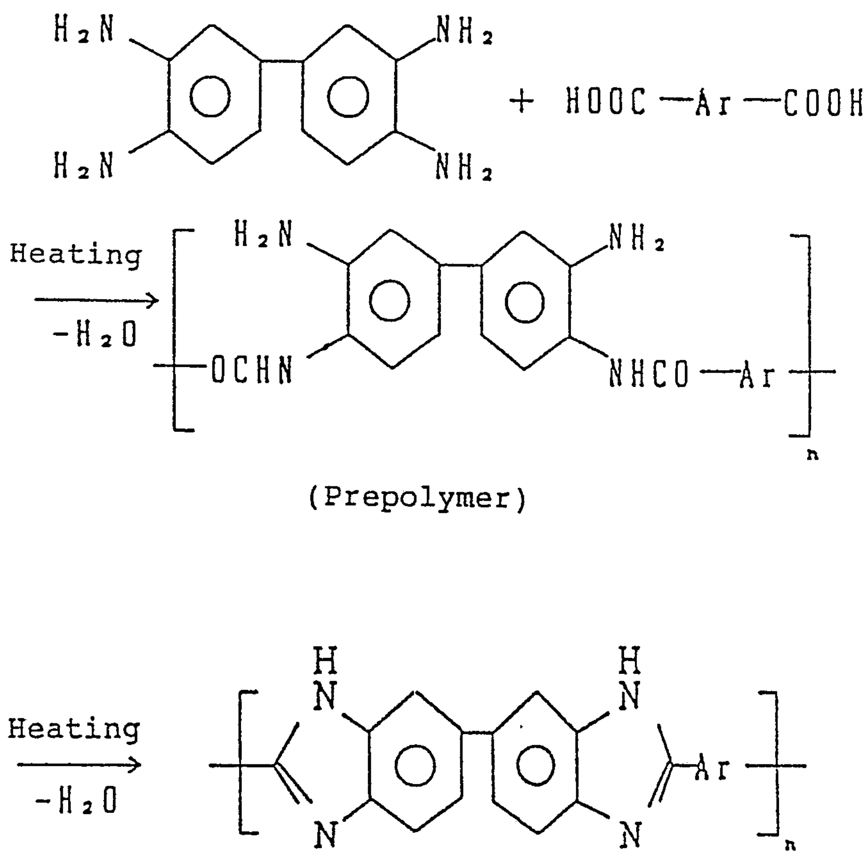


In the polymerisation reaction using an aqueous polyphosphoric acid solution, the conversion of the monomer to the prepolymer proceeds very rapidly, almost instantaneously. Some polymers, conversely, are synthesized through two clearly distinct stages.

When the reaction proceeds through two stages as described above, the reaction system will preferably be heated at a temperature in the range of 20° to 150°C for a period of 2 to 72 hours for the formation of the prepolymer and at a temperature in the range of 80° to 250°C for a period of 2 to 96 hours for the formation of the final step polymer.

Since the matrix and rigid aromatic polymers produced as described above exhibit extremely high compatibility with each other, the resulting molecular composite has the polymers dispersed homogeneously throughout each other on the molecular level.

The molecular composite which is obtained by the method of the present invention exhibits outstanding mechanical strength and thermal stability and excellent solvent resistance and manifests anisotropy only sparingly and, therefore, is highly suitable for use as structural materials for aircraft and automobiles, for example. Moreover, as a solvent of low corrosiveness is used in the preparation of the composite, disadvantages of prior art molecular composites mentioned above are avoided.

The invention will now be described further with reference to the following non-limiting Examples.

Example 1

Under an atmosphere of argon, 2.0 g of polyP-phenylenebenzobisthiazole (intrinsic viscosity 4.98) and 8.0 g of poly-2,5-benzimidazole (intrinsic viscosity 2.42), synthesized in advance, were dissolved at 50°C in 100 g of an aqueous phosphoric acid solution (concentration 85% by weight phosphoric acid). The homogeneous solution consequently obtained was cast on a flat glass sheet and left standing overnight under a high degree of vacuum at normal room temperature.

The produced film, still held fast on the glass sheet, was then thoroughly washed with water, washed with a dilute aqueous solution of sodium bicarbonate (5% by weight), washed again with water, then left standing overnight at about 100°C under a high degree of vacuum, and dried.

A yellow molecular composite film (0.2 micrometer in thickness) consisting of 20% by weight of polyP-phenylenebenzobisthiazole as the rigid aromatic polymer and 80% by weight of poly-2,5-benzimidazole as the matrix polymer was obtained. This film was found to possess tensile strength of 7632 psi (532 $kg/cm^2$ -52.6 MPa), a value 1.8 times the tensile strength of poly-2,5-benzimidazole, and modulus of elasticity of 3.90 x

$10^5$ psi ($2.7 \times 10^4$ kg/cm$^2$ -2.69 GPa), a value 1.32 times the modulus of elasticity of poly-2,5-benzimidazole.

Example 2

A solution obtained by dissolving 2.0 g of the same poly-P-phenylenebenzobisthiazole as used in Example 1 in 25 g of an aqueous polyphosphoric acid solution (concentration 85% by weight phosphoric acid) and 2.0 g of 3,3',4,4'-tetraaminobiphenyl chloride and 0.85 g of isophthalic acid added thereto were stirred and heated at 170°C for 4.5 hours and further stirred and heated at 200°C for 24 hours. The homogeneous solution of the molecular composite obtained was subjected to casting by following the procedure of Example 1, to produce a yellow film having a thickness of 0.2 micrometer and emitting a purplish blue fluorescent colour. The rigid aromatic polymer content of this film was 15% by weight and the matrix polymer content thereof 85% by weight.

This film was found to possess tensile strength of 6712 psi (468 kg/cm$^2$ 46.3 MPa), a value 1.9 times the tensile strength of polybisbenzimidazole, and modulus of elasticity of $3.20 \times 10^5$ psi ($2.2 \times 10^4$ kg/cm$^2$ -2.2 GPa), a value 1.21 times the modulus of elasticity of the matrix polymer.

In the method of this invention, the aqueous phosphoric acid solution is used as a common solvent for the rigid aromatic polymer and the matrix polymer as described above. The phosphoric acid has an advantage that it is a weaker acid than sulfuric acid or methanesulfonic acid, is less corrosive, and is easily removed from the produced molecular composite. Further, since the rigid aromatic polymer exhibits sufficient crystallinity in the aqueous phosphoric acid solution, the produced molecular composite has excellent mechanical strength. Since the aqueous phosphoric acid solution also functions as a condensing agent, the polymerisation of the matrix polymer can be carried out directly in the aqueous phosphoric acid solution. Thus, the produced molecular composite has the matrix polymer homogeneously dispersed therein.

As will be evident to those skilled in the art modifications of the present invention hereinabove disclosed can be made without departing from the spirit of the scope of the invention as defined by the following claims.

## Claims

1. A method of producing a molecular composite, said method comprising dissolving a rigid aromatic polymer or a precursor therefor and a matrix polymer or a precursor therefor in an acidic solvent to yield a homogeneous solution, if required reacting a said precursor to produce a said rigid aromatic polymer or matrix polymer, and divesting the homogeneous solution containing said rigid aromatic polymer and said matrix polymer of said acidic solvent whereby to yield said composite, wherein said rigid aromatic polymer and said matrix polymer each contain structural repeat units comprising a benzene ring carrying at least one condensed heterocyclic ring formed by a bridging group of

formula -X- $\overset{|}{C}$ =N-where X which is attached to the benzene ring represents NH, N-phenyl, 0 or S, characterised in that as said acidic solvent is used an aqueous phosphoric acid solution.

2. A method as claimed in claim 1 comprising dissolving in said acidic solvent a said rigid aromatic polymer having a structural unit of formula

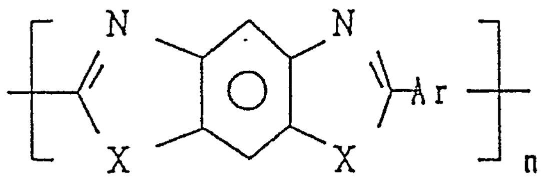
or

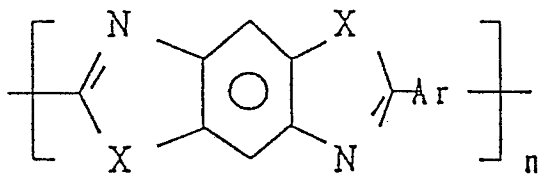
or

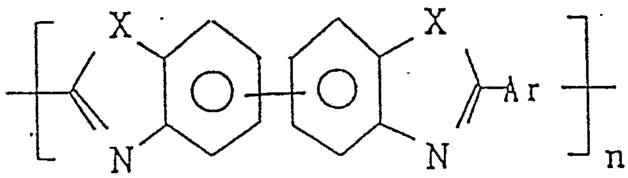

(wherein X is as defined in claim 1 and Ar represents an aromatic group) or a precursor therefor and a said matrix polymer having a structural unit of formula

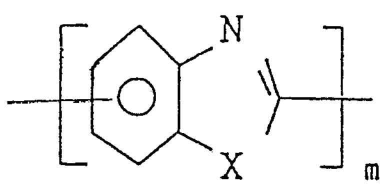

(wherein X is as defined in claim 1) or a precursor therefor.

3. A method as claimed in either of claims 1 and 2 wherein as said phosphoric acid solution is used a solution which is 80 to 95% by weight phosphoric or polyphosphoric acid.

4. A method as claimed in any one of claims 1 to 3 wherein said rigid aromatic polymer or precursor therefor and said matrix polymer or precursor therefor are dissolved in said acidic solvent in amounts sufficient to produce concentrations of each of said polymers in said homogeneous solution of 2 to 80% by weight.

5. A method as claimed in claim 4 wherein said rigid aromatic polymer or precursor therefor and said matrix polymer or precursor therefor are dissolved in said acidic solvent in amounts sufficient to produce concentrations of each of said polymers in said homogeneous solution of 2 to 20% by weight.

6. A method as claimed in any one of claims 1 to 5 wherein said rigid aromatic polymer or precursor therefor and said matrix polymer or precursor therefor are dissolved in said acidic solvent in amounts sufficient to produce a ratio by weight of said rigid aromatic polymer to said matrix polymer of from 5:95 to 80:20.

7. A method as claimed in any one of claims 1 to 6 wherein said homogeneous solution is obtained by preparing separate solutions of said rigid aromatic polymer and of said matrix polymer and subsequently mixing the solutions.

8. A method as claimed in any one of claims 1 to 7 wherein a precursor of said rigid aromatic polymer or said matrix polymer is dissolved in said acidic solvent and wherein the resulting solution is heated to a temperature not exceeding 250°C thereby to induce a condensation reaction of said precursor to produce said rigid aromatic polymer or matrix polymer.

9. A method as claimed in any one of claims 1 to 8 wherein said homogeneous solution is heated to a temperature of from about 25°C to about 100°C.

10. A method as claimed in any one of claims 1 to 9 wherein said homogeneous solution is divested of said solvent by casting the homogeneous solution onto a surfce and drying under a reduced pressure to produce a film.

11. A method as claimed in claim 10 further comprising washing said film with an aqueous alkaline solution.

12. A method as claimed in any one of claims 1 to 11 further comprising washing said composite with water after the divesting of said solvent therefrom.

13. A molecular composite produced by a process as claimed in any one of claims 1 to 12.